Europäisches Patentamt

(19) European Patent Office

Office européen des brevets

(11) Publication number: **0 097 473**
**B1**

(12) **EUROPEAN PATENT SPECIFICATION**

(45) Date of publication of patent specification: **05.11.86**

(51) Int. Cl.⁴: **G 01 B 11/06,** G 01 N 21/59

(21) Application number: **83303411.9**

(22) Date of filing: **13.06.83**

(54) **Evaluating the thickness of a layer or determining change in thermal characteristics with depth by thermal wave detection.**

(30) Priority: **18.06.82 US 389623**

(43) Date of publication of application:
**04.01.84 Bulletin 84/01**

(45) Publication of the grant of the patent:
**05.11.86 Bulletin 86/45**

(84) Designated Contracting States:
**DE FR GB NL**

(56) References cited:
**WO-A-82/00891**
**US-A-4 255 971**

**TECHNISCHES MESSEN, vol. 49, no. 11, November 1982, C. LINHART et al. "Berührungslose Bestimmung der Dicke von Oberflächenbeschichtungen durch thermische Messverfahren", pages 391-398**

The file contains technical information submitted after the application was filed and not included in this specification

(73) Proprietor: **THERMA-WAVE INC.**
**47734 Westinghouse Drive**
**Fremont California 94539 (US)**

(72) Inventor: **Rosencwaig, Allan**
**134 Timberline Court**
**Danville California 94526 (US)**

(74) Representative: **Jackson, David Spence et al**
**REDDIE & GROSE 16, Theobalds Road**
**London, WC1X 8PL (GB)**

(56) References cited:
**JAPANESE JOURNAL OF APPLIED PHYSICS, vol. 20, no. 1, January 1981, T. SAWADA et al. "Observation of subsurface structures of scanning laser photoacoustic spectroscopy", pages L25-L27**

**ELECTRONICS LETTERS, vol. 17, no. 15, July 1981, A. LEHTO et al. "Alternating beam method in photothermal microscopy and photoacoustic microscopy", pages 540-541**

## 0 097 473

**Description**

This invention relates to a method for determining the thickness of a layer or layers of material deposited on a substrate by measuring either the phase or magnitude parameters of thermal wave signals generated by a focused periodic heat source, comprising the steps of: focusing said periodic heat source on the layer or uppermost layer deposited on said substrate; measuring the value of one of said parameters of the thermal wave signals at a plurality of selected modulation frequencies of said source; and determining the thickness from the measured values.

The invention also relates to a method for determining the change in thermal characteristics as a function of depth in a non-uniform sample having impurities or defects therein by measuring either the phase or magnitude parameter of thermal wave signals generated in said sample by a focused periodic heat source, comprising the steps of: focusing said periodic heat source on said non-uniform sample; measuring the value of one of said parameters of said thermal wave signal generated in said non-uniform sample at a plurality of selected modulation frequencies; and determining the said change from the measured values.

In the field of integrated circuit (IC) manufacturing, it is desirable to nondestructively measure the thickness of thin film layers applied to semiconductor substrates. There is also a need for a technique for nondestructively evaluating the concentration levels of diffused or implanted ions or dopants in semiconductor lattice structures as a function of depth. A suitable depth profiling technique could also be used for quantifying lattice structure defects such as vacancies, or for measuring any other parameter that varies with depth in the material.

In an article entitled "Thermal-Wave Microscopy" by Allan Rosencwaig, published in the March 1982 issue of Solid State Technology at pages 91 to 97, the capability of thermal-wave microscopy to detect and image subsurface areas is discussed, and semiconductor manufacturing applications, including nondestructive depth profiling and doped region characterisation are discussed. In a thermal wave microscope, thermal features beneath the sample surface are detected and imaged by sensing the thermal waves that scatter and reflect from these features. The thermal waves are generated by focusing an intensity modulated localized heat source at a microscopic point. The periodic heat source may be, for example, an intensity modulated beam of electromagnetic radiation or particle beams. Irradiation of a sample with an intensity modulated beam of energy results in a periodic heating of the sample and in the generation of thermal waves.

One method of detecting thermal waves involves the measurement of the oscillating temperature of the surface of the same at the spot of localized heating. The oscillating temperature can be measured by placing the sample in photoacoustic cell and measuring the pressure oscillations in the cell induced by the period heat flow from the sample to the gas in the cell. (See "Scanning Photo-Acoustic Microscopy", Y H Wong, Scanned Image Microscopy, Academic Press London 1980). The oscillating surface temperature may also be measured with a laser traversing the gas or liquid medium in contact with the heated spot on the sample surface. This laser beam will undergo periodic deflections because of the periodic heat flow from the sample to the adjacent medium. (See, "The Mirage Effect in Photothermal Imaging", Fournier and Boccara, Scanned Image Microscopy, Academic Press London, 1980). A third technique for measuring the oscillating surface temperature utilizes an infrared detector that measures the periodic infrared emission from the heated spot on the surface of the sample. (See, "Photothermal Radiometry for Spatial Mapping of Spectral and Material Properties", Nordul and Kanstad, Scanned Image Microscopy, Academic Press London, 1980).

Another method for detecting thermal waves involves the measurement of the thermal displacement of the sample surface at the spot of localized heating. Techniques for carrying out the latter method include the use of a laser probe or a laser interferometer. (See, "Photo Displacement Imaging", Ameri, et al. Photoacoustic Spectroscopy Meeting, Technical Digest, Paper THA6-2, Optical Society of America, 1981).

A third method for detecting the thermal waves involves the measurement of acoustic signals propagating in the sample. Acoustic waves are generated by the thermal waves in the sample because thermally induced stress-strain oscillations are set up in the heated region of the sample. These acoustic waves can be detected by a variety of techniques including a laser probe (See, "Probing Acoustic Surface Perturbations by Coherent Light", Whitman and Korpel, Applied Optics, Vol. 8, pp. 1567—1580, 1969); a laser interferometer (See "Measurements Using Laser Probes", De La Rue, et al, Proc IEE, Vol. 119, pp. 117—125, 1972) or with an acoustic transducer, such as a piezoelectric transducer, in acoustic contact with the sample. (See US Patent No. 4,255,971, and an article entitled "Observation of Subsurface Structures by Scanning Laser Photoacoustic Spectroscopy" by Tsuguo Sawada, Hiromichi Shimizu and Shohei Oda, published in the Japanese Journal of Applied Physics, Vol. 20, No. 1, January 1981 at pages L25—L27).

Any of the above-described methods can be used to detect and measure thermal waves for performing thermal wave imaging and microscopy.

In addition to imaging, thermoacoustic microscopy can be used for other types of analyses. For example, thermoacoustic microscopy can be used to analyze the plate-mode resonant signature of bonded members to determine the quality of the bond therebetween. The latter technique is disclosed in copending European patent application EP—A—0095227 which is mentioned in connection with Article 54(3) EPC.

United States patent specification US—A—4 255 971 discloses a method of determining the thickness

2

of a layer of material deposited on a substrate and proposes that the method be performed by analyzing the magnitude and/or phase of the photoacoustic signal as a function of the modulation frequency dependence of the heat-source, or by analyzing the time-dependence of the photoacoustic signal generated by pulses of laser light or pulses from particle beams.

It has been found that the prior methods of measuring and analyzing thermal wave data to evaluate thicknesses of layers and to obtain depth profiling of thermal characteristics have provided only crude approximations of subsurface features.

Accordingly, it is an object of the subject invention to provide a new and improved method for determining the thickness of a thin film applied to a substrate.

It is another object of the subject invention to provide a new and improved method for determining the thickness profile of a multilayer thin film structure utilizing thermal wave techniques.

It is a further object of the subject invention to provide a new and improved method for determining the thickness of the topmost layer in a multilayer structure using a thermal wave technique.

It is still another object of the subject invention to provide a method for profiling as a function of depth, a sample that has had its lattice structure locally disrupted through the diffusion or implantation of foreign ions, such as dopants.

It is still a further object of the subject invention to provide a method for profiling, as a function of depth, a sample containing imperfections in its lattice structure.

It is still another object of the subject invention to provide a method for evaluating a sample having thermal characteristics that vary as function of depth for any reason.

According to one aspect of the present invention, a method for determining the thickness of a layer or layers of material deposited on a substrate, as defined hereinbefore, is characterised in that the number of modulation frequencies selected is greater than the number of layers whose thickness is to be determined; and by the steps of: normalizing the measured value of said parameter of each modulation frequency selected relative to the value of said parameter determined for a reference sample; and comparing said normalized values with expected normalized values.

According to another aspect of the present invention, a method for determining the change in thermal characteristics as a function of depth in a non-uniform sample, as defined hereinbefore, is characterised by the steps of: normalizing the measured value of said parameter at each modulation frequency relative to the value of said parameter determined for a reference sample; and comparing said normalized values with expected normalized values derived from a model depicting the thermal process in said samples, with said model for the non-uniform sample being characterised as divided into a plurality of hypothetical layers each having the same thickness, with the number of layers being less than the number of modulation frequencies selected, whereby the thermal characteristics of the hypothetical layers and the depth variation of these thermal characteristics in the non-uniform sample can be determined.

In order to interpret the results of thermal wave detection on a sample, it is necessary to construct a mathematical model that provides expressions for the temperature at and beneath the surface of the sample and for the thermoelastic response beneath its surface. If thermoacoustic detection is used, the model must aso take into effect the elastic wave propagation and interference effects in the sample. The model must also include all of the experimental parameters, such as the character of the incoming heat source, the character of the sample, and the type of detector used. These parameters must be considered since they affect the detected thermal wave signals. For example, the magnitude and phase of thermal waves generated in material are a function of the power and modulation frequency of the beam. In addition, the thermal waves are also a function of the sample's density, specific heat and thermal conductivity. The type of detection system used also affects the thermal wave signals. Thus, it is very important to consider thermal expansion coefficients and the elastic coefficient of the sample when thermal displacement and thermoacoustic detection is utilized.

One proposal for developing a model for profiling thermal characteristics in a sample, as a function of depth, utilizing a photoacoustic technique, is disclosed in applicant's book "Photoacoustics and Photoacoustic Spectroscopy", A Rosencwaig, Wiley Interscience, New York 1980. In order to analyze the signals detected as a result of thermal waves, a new mathematical model must be developed. Appendix A hereinafter presents the derivation of a mathematical model of a one-dimensional multilayer system which can be utilized to carry out the calculations proposed in the subject invention, and has been published at pages 4240 to 4246 in the June 1982 issue of the Journal of Applied Physics, Vol. 53. While it is believed that the mathematical approach disclosed in Appendix A represents a fairly accurate characterization of the interactions within a sample, it is to be understood that the scope of the subject invention is not to be limited by the exemplary model. In contrast, in the future it is expected that more sophisticated two and three-dimensional models may be developed which could add to the accuracy of the determinations.

The proposed model provides a basis for calculating expected values of thermal wave signals based on all the parameters in a given experiment, such as beam power, the type of detection system used and the sample's characteristics. As discussed below, by analyzing the experimental data obtained in accordance with the subject method, with respect to the model, significant information can be developed concerning the subsurface characteristics of the sample.

In a preferred embodiment of the said one aspect of the subject invention, a periodic heat source is focused on the uppermost layer deposited on the substrate. The thermal waves generated are then detected and the value of either their magnitude or phase is recorded. This value is normalized against a measurement taken from a reference sample. The reference sample consists of a substrate of known construction. The normalized values are then compared with values derived from a mathematical model corresponding to the experimental parameters. The comparison is accomplished using a least-squares fitting routine whereby a determination of the thickness of the thin film layer can be made.

The above described techniques can be applied to profile the thicknesses of a multilayer deposition on a substrate. As disclosed in Appendix A, the multilayer model is expanded recursively to obtain a mathematical expression accounting for a plurality of layers having different characteristics. Since each layer presents another unknown, to solve the equation it is required to provide additional experimental data points. Accordingly, for multilayer determinations, measurements of the thermal wave signals are taken at a plurality of modulation frequencies of the heating source. At a minimum, the number of test frequencies used must exceed the number of unknown layers to be determined.

In a preferred embodiment of the said other aspect of the subject invention, the concentration, as a function of depth, of dopants infused into a structure is determined. In this determination, a variation of the multilayer mathematical model can be used. More particularly, in the mathematical analysis, a portion of the upper surface of the sample is divided into hypothetical layers of fixed depth. The unknowns in the equations become the thermal conductivity of each layer. The thermal waves are detected at a plurality of modulation frequencies. The number of frequencies detected must exceed the hypothetical number of layers to be analyzed. The normalized values are then compared with expected values derived from the model. By this arrangement, the thermal conductivity characteristics of the sample can be plotted as a function of depth. By relating the thermal conductivity characteristics to known effects of impurity levels, the concentration of the dopants can be determined.

In another embodiment of the subject invention, the thickness of a layer on a substrate is evaluated in a production situation, by determining the expected thermal wave signal associated with a desired thickness. By taking proper thermal wave measurements, a comparison can be made with predetermined values, representative of the desired sample, for evaluating the thickness of the layer.

The invention will now be described by way of example with reference to the accompanying drawings, in which:

Fig. 1 is a graphical representation of a two-layer model for a thin film on a thick substrate,

Fig. 2 is a graph showing the relationship between the phase and magnitude of thermal wave signals as a function of depth and frequency,

Fig. 3 is a graphical representation of a model for a multilayer system;

Fig. 4 is a graphical representation of a multilayer model of a sample with a non homogeneous thermal conductivity;

Fig. 5 is a graph showing the relationship between the phase and magnitude of thermal wave signals as a function of depth and frequency, for a different example from that of Fig. 2, and

Fig. 6 is a graphical representation of a model of a sample with a nonhomogenous thermal conductivity in which heating is occurring at a subsurface layer $x=x_0=d_0$.

In a method embodying the invention, for non-destructively determining the thickness of layers deposited on a substrate by analyzing thermal waves generated in a sample, the sample is subjected to a focused periodic heat source which generates thermal waves. Either the magnitude or phase of the thermal waves generated in the sample are measured. The values obtained are normalized relative to a reference sample. The normalized values are analyzed with respect to a theoretical model of the sample to calculate the thickness of the unknown layers. In an alternative embodiment, thermal characteristics can be determined in a sample as a function of depth. The latter approach is useful for nondestructively determining dopant concentrations or lattice defects in semiconductor devices as a function of depth beneath the surface.

Broadly, a method embodying the invention for evaluating the thickness of a layer or layers of material on a substrate by measuring either the phase or magnitude parameters of thermal wave signals generated by a focused periodic heat source, comprises the following steps.

Focusing the periodic heat source on the uppermost layer deposited on said substrate. Measuring the value of one of the parameters of the thermal wave signals generated in the sample at at least one selected modulation frequency of the periodic heat source. Comparing the obtained value of the said one parameter with a predetermined value of the same one parameter associated with a reference sample, whereby the thickness of the layer can be evaluated. The substrate maybe a semiconductive material such as silicon. The thermal wave signals can be measured with a means that detects the oscillating temperature of the heated spot on the surface of the substrate. The detection means may include a photoacoustic cell apparatus, or be defined by a laser which senses the periodic heating of a medium in contact with the heated spot on the surface of the substrate.

Alternatively the detection means may be defined by an infrared detector which senses the periodic infrared emissions from the heated spot on the surface of the substrate.

Where the thermal wave signals are measured with a means that detects the oscillating thermal displacement of the surface of the substrate at the heated spot, the detection means may include a laser probe, or a laser interferometer.

Where the thermal wave signals are measured with a means for detecting the acoustic signals that are generated by the thermal waves, the detection means may include an ultrasonic transducer, or a laser probe, or a laser interferometer.

More specifically, to determine the thickness of a layer or layers of material deposited on a substrate by measuring either the phase or magnitude parameters of thermal wave signals generated by a focused periodic heat source in a manner embodying the present invention, the following steps are carried out.

The periodic heat source is focussed on the uppermost layer deposited on the substrate. The value is measured of one of the parameters of the thermal wave signals at a plurality of selected modulation frequencies of the source. The number of modulation frequencies selected is greater than the number of layers whose thickness is to be determined. The measured value of the parameter of each modulation frequency selected is normalized relative to the value of the same parameter determined for a reference sample. The normalized values are compared with expected normalized values derived from a model depicting the thermal process in the samples, whereby the thickness of the said layers can be determined. This method of evaluating the thickness of a layer or layers of material is particularly applicable where the substrate is a semiconductive material such as silicon. The thermal wave signals are measured with a means that detects the oscillating temperature of the heated spot on the spot on the surface of the uppermost layer deposited on the substrate. The detection means may include a photoacoustic cell apparatus, or be constituted by a laser which senses the periodic heating of a medium in contact with the heated spot on the surface of the uppermost layer deposited on the substrate, or by an infrared detector which senses the periodic infrared emissions from the heated spot on the surface of the uppermost layer deposited on the substrate.

Alternatively the thermal wave signals can be measured with a means that detects the oscillating thermal displacement of the surface of the uppermost layer deposited on the substrate at the heated spot, such as means including a laser probe, or a laser interferometer.

Furthermore, the thermal wave signals may be measured with a means which detects the acoustic signals that are generated by the thermal waves, such as detection means which includes an ultrasonic transducer, or a laser probe, or a laser interferometer.

In another embodiment in which the parameter measured is the phase of the thermal wave signals, the values are normalized by subtracting the value of the phase of the reference sample from the phase of the multilayer substrate.

The parameter measured can alternatively be the magnitude of the thermal wave signals, and the values be normalized by taking a ratio of the value obtained from the reference sample and the value obtained from the multilayer substrate.

The comparison of the measured normalized values to the normalized values derived from the model is done by a least-squares fitting routine.

To determine the change in thermal characteristics as a function of depth in a non-uniform sample having impurities or defects therein by measuring either the phase or magnitude parameter of thermal wave signals generated in said sample by a focused periodic heat source in a manner embodying the invention, the following steps are carried out.

The periodic heat source is focussed on the non-uniform sample. The value is measured of one of the said parameters of the thermal wave signal generated in the non-uniform sample at a plurality of selected modulation frequencies. The measured value of the said parameter at each modulation frequency is normalized relative to the value of the said parameter determined for a reference sample. The normalized values are compared with expected normalized values derived from a model depicting the thermal process in the samples, the model for the non-uniform sample being characterized as divided into a plurality of hypothetical layers each having the same thickness, with a number of layers being less than the number of modulation frequencies selected, whereby the thermal characteristics of the hypothetical layers and the depth variation of these thermal characteristics in the non-uniform sample can be determined. The thermal characteristics are the thermal conductivities of the hypothetical layers. The concentration of impurities or defects in the sample can be correlated to variations in the thermal conductivity such that a profile of the impurities or defects can be obtained as a function of depth.

The measurements of the said one parameter can be taken at a plurality of modulation frequencies whereby the resolution of the said depth variations is increased.

The thermal wave signals can be measured with a means that detects the oscillating temperature of the heated spot on the surface of said non-uniform sample, such as detection means which includes a photoacoustic cell apparatus, or is constituted by a laser which senses the periodic heating of a medium in contact with the heated spot on the surface of the non-uniform sample, or by an infrared detector which senses the periodic infrared emissions from the heated spot on the surface of said non-uniform sample. Furthermore, the thermal wave signals can be measured with a means that detects the oscillating thermal displacement of the surface of said non-uniform sample at the heated spot, in which case the detection means may include a laser probe, or a laser interferometer.

Alternatively, where the thermal wave signals are measured with a means which detects the acoustic signals that are generated by the thermal waves, the detection means may include an ultrasonic transducer, or again a laser probe or a laser interferometer.

If the parameter measured is the phase of the thermal wave signals, the values are normalized by subtracting the value of the phase of the reference sample from the phase of the non-uniform sample.

If the parameter measured is the magnitude of the thermal wave signals, the values are normalized by taking a ratio of the value obtained from the reference sample and the value obtained from the non-uniform sample.

The comparison of the measured normalized values to the normalized values derived from the model can be done by a least squares fitting routine.

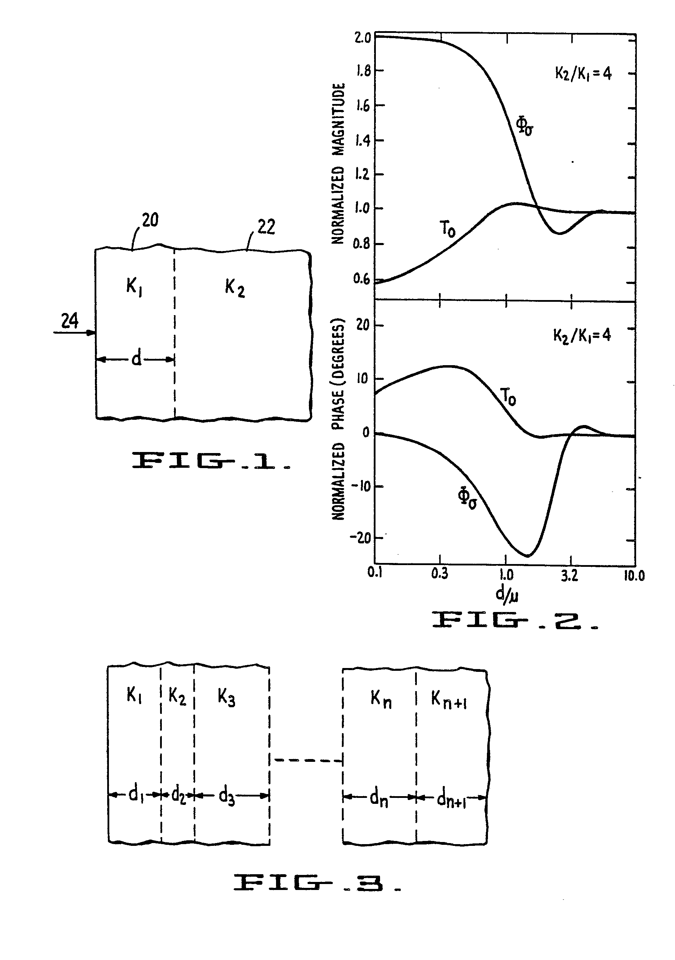

In order to analyze the thermal wave signals detected when a sample is tested, a mathematical model must be developed. Referring to Fig. 1, a two-layer representation for a thin film layer 20 deposited on a thick substrate 22 is illustrated. Using such a representation, mathematical expressions can be derived for explaining the effects of thermal waves.

As discussed above and in the previously cited references, thermal waves can be detected by measuring variations in temperature or thermal displacement at the surface or by detecting the thermoacoustic signal generated by the thermal waves. In any case, the detected signal will be periodic in response to the amplitude modulated incoming heat source. These signals are quantified by correlating either the magnitude of the output signal or its phase in relation to the incoming modulation signal.

The output signal detected will depend on a variety of parameters, including the frequency of the modulation signal the method of detection and the type of material being tested. Because there are so many factors affecting measurement, an absolute standard cannot be conveniently used. Accordingly, measurements of the thermal waves must be normalized against a reference sample. As discussed below, the reference sample is defined based upon the type of information which is being sought.

As discussed above, the normalized values of either the phase or magnitude of the thermal wave signals are used to determine the desired information. This result is possible because the magnitude and phase of the thermal wave signal varies with the modulation frequency for a particular ratio of two thermal conditions. The graphs displayed in Fig. 2 plot normalized values for the magnitude and phase parameters, in a two-layer model illustrated in Fig. 1 where the thermal conductivities K are related as $K_2/K_1=4$. In the graphs, the X axis is frequency normalized in units of $d/\mu$ where d is the thickness of the top layer and $\mu$ is the thermal diffusion length given by

$$\mu = \left(\frac{2K}{\rho C \omega}\right)^{1/2}$$

where $\rho$ is the density, C is the specific heat and $\omega$ is the beam modulation frequency in radians per second. The curves illustrate how the normalized parameters of magnitude and phase vary over both the depth of the layer and frequency of the modulation beam.

Turning now to the method of the subject invention, a value for either the phase or magnitude of the thermal waves, needed to achieve normalization, is obtained by focusing a periodic heat source on a reference sample. In the situation where the thickness of a single layer deposited on a substrate is to be determined, the reference sample can be the uncoated substrate. Since the phase and magnitude of the detected signals are not dependent upon the thickness of a uniform reference sample, any sample corresponding to the substrate to be tested may be used as a reference sample.

A periodic heat source 24 is then impinged on the upper surface of thin layer 20. As discussed in Appendix A, the thermal wave generated will be scattered and reflected from the boundary between the thin layer 20 and the substrate 22. This effect can be observed by noting the variation either in the magnitude or the phase of the thermal waves detected.

The magnitude or phase values measured are then normalized, to derive a value which is representative of the layer to be analyzed. As is well-known, magnitude values can be normalized by calculating the ratio between the reference value and the sample value. Since phase measurements are periodic, the normalization of these values can be obtained by subtracting the reference phase from the test sample phase. A measurement of either the magnitude or the phase can be used in the method of the subject invention. In many cases, the measurement of normalized phase will be preferred since phase measurements are dependent on fewer experimental variables than are the magnitude measurements.

Once the parameter values have been normalized, they are compared with expected normalized values derived from the model which is being utilized. One suitable model is disclosed in Appendix A. The mathematical model takes into account all experiment parameters, and is arranged in an expression which varies as a function of depth.

In order to obtain an unambiguous determination of the thickness "d" of layer 20, it is preferable to make measurements on the sample at a plurality of beam modulation frequencies. Thereafter, the experimental data obtained is applied to a mathematical equation defining the model and the equation is solved for "d". Preferably, the equation is solved using well-known least-squares fitting routines which optimize the fit between the experimental results and the theoretical model. The accuracy of the results will be enhanced by providing additional experimental data points derived by obtaining a plurality of information at various beam modulation frequencies.

The above described technique provides for a method for yielding a quantitative measurement of the thickness of an uppermost layer deposited on a substrate. In some manufacturing situations, it is not necessary to calculate the actual thickness of the layer deposited but rather to determine if that thickness

**0 097 473**

corresponds to a desired thickness. Stated differently, in a manufacturing setting, it may be necessary to determine only if the thickness of a particular coating corresponds to the desired thickness and is therefore satisfactory, rather than having to calculate the actual thickness of the coating.

In the latter situation, it may be unnecessary to compare the data measured during testing with theoretical data derived from a normalized model. Rather, the experimental results can be compared to a predetermined expected result, corresponding to a sample having a layer deposited with the desired thickness. Thus, the subject invention contemplates a method wherein the experimentally derived normalized parameter is compared to a predetermined normalized parameter for evaluating whether the thickness of the layer in question corresponds to the predetermined thickness layer. As with the first described method, in order to eliminate any ambiguity, it would be desirable to take a plurality of measurements at various modulation frequencies.

The latter method may be particularly suited for integrated circuit manufacturing technique wherein layers of material are depositing on a silicon or other semiconductive substrate. After arriving at a predetermined value corresponding to a satisfactory construction, each manufactured IC can be scanned and measured. If the measured values correspond to the predetermined values, the coating thickness can be classified as satisfactory.

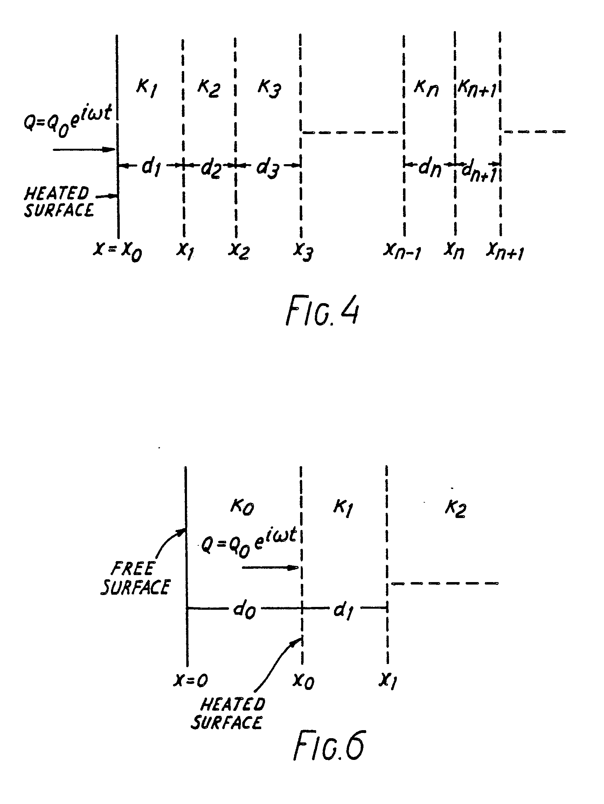

In order to obtain a thickness profile of a multilayer thin film structure, a multilayer model must be developed. More particularly, and referring to Fig. 3, the numbers of layers in the model must be equal to the number of layers in the structure to be evaluated. Using a reitterative version of the two-layer model discussed above, an expression representing the thicknesses of the various layers can be calculated.

In this analysis, the thermal parameters $(K_1—K_n)$ of each layer is known. In order to calculate all of the unknown thicknesses $(d_1—d_n)$, it is necessary to experimentally provide a number of data points which exceeds the number of unknown thicknesses. Accordingly, in the method of the subject invention, the values of parameters are determined at a plurality of selected modulation frequencies wherein the number of modulation frequencies selected is greater than the number of unknown layers. In this situation, wherein the thickness of a plurality of layers is to be determined, the normalization of the values obtained will be relative to the underlying uncoated substrate. As in the previous example, this reference sample can be either the actual sample prior to deposition of the layers or another sample having a similar structure and thermal characteristics.

The depth of penetration of the thermal waves for effective imaging is dependent upon their wavelength. More particularly, longer wavelengths, and hence lower modulation frequencies will provide images to a greater depth. Thus, in multilayer analyses, the frequencies selected must include wavelengths sufficient to provide information as to the lowest layer of interest.

In order to determine the thickness of only the topmost layer, in a multilayer structure, where all the other layer thicknesses are known, multiple measurements, as required in the previously described method are not required. More particularly, when the other thickness layers are known, their values can be applied to the theoretical multilayer model with only the thickness of the uppermost layer being unknown. In this instance, the reference sample used for normalization will be the multilayer structure prior to the topmost layer being deposited. By this arrangement, the experimental values derived will represent only that of the uppermost layer. As in the determination of a single layer thickness, measurements at additional modulation frequencies will reduce the likelihood of ambiguities in measurement.

By using the multilayer model in a different approach, it is possible to profile a sample's thermal characteristics as a function of depth. This technique is of extreme interest in the field of integrated circuit manufacture where it is desirable to examine the lattice structure of semiconductor materials, such as silicon. More particularly, manufacturers, frequently diffuse or implant ions or dopant materials in the silicon structure in order to effect its semiconductive properties. The subject method can be utilized to develop a profile of the concentration of these dopants as a function of depth from the surface of the material. Another use for the subject method would be to analyze defects, such as dislocations or vacancies, in the lattice structure as a function of depth.

As can be appreciated, in the above discussed multilayer model, determination of layer thicknesses was made based upon prior knowledge of the thermal characteristics of each material layer deposited. Thus, while the thicknesses were unknown, all other thermal characteristics were known. In this embodiment of the subject method, the sample is treated as a multilayer structure having unkown thermal characteristics. Further, the model is divided into a plurality of hypothetical layers of a known thickness. Thus, the unknowns in the mathematical model become thermal characteristics such as the thermal conductivity, while the thickness of the layers are known. As discussed below, by calculating the thermal characteristics as a function of depth, a depth profile of dopant concentrations can be derived.

In accordance with the subject method, a periodic heat source is focused on the nonuniform sample. Measurements of one of either the magnitude or phase parameters of the thermal wave signal are taken at selected modulation frequencies. Similar to the multilayer method, the number of frequencies used must exceed the number of hypothetical layers being investigated. As can be appreciated, resolution of the depth profile can be increased by increasing the number of hypothetical layers. However, since an increase in the number of hypothetical layers requires an increased number of test frequencies, the length of time for an examination will increase. Thus, in a manufacturing situation, the need to maximize the resolution of the depth profile can be balanced against the time necessary to carry out the measurements.

7

As in the previous methods, the values obtained must be normalized against a reference sample. In the instant method, the reference sample is characterized by a uniform or nontreated material. By this arrangement, the effects of the dopant or lattice irregularities can be directly analyzed.

Similar to the calculations described for the multilayered determination, the measured data is analyzed with a least-squares fitting routine relative to the multilayer model. As pointed out above, in this analysis, the thicknesses of the layers are known, while the thermal characteristics of the layers are unknown. Once the thermal conductivities of the layers are calculated, it is necessary to obtain a correlation between the thermal conductivity of the lattice with respect to the concentration of dopants or defects in the lattice. Stated differently, a relationship must be established between the value of the thermal conductivity and the level of dopants or defects in the lattice. Such a correlation may be obtained from calibration experiments or from direct measurements of thermal conductivity for different concentrations of dopants or defects.

Thus, by this method, values can be derived which represent the concentration levels of dopants or impurities in each hypothetical layer. This information provides a profile, as a function of depth of the desired characteristic.

In summary, there has been disclosed new and improved methods for determining the thickness of a layer of material deposited on a substrate by studying the phase or magnitude parameter of the detected thermal wave signals. In the subject method, a periodic heat source is focused on the sample. A measurement is made of one of the parameters of the thermal wave signal. The measurements are taken at a plurality of beam modulation frequencies with the number of frequencies selected being greater than the number of layers whose thicknesses are to be determined. The values are normalized relative to the values obtained from a reference sample. The normalized values are then analyzed with respect to a mathematical model of the multilayer system. The model represents a set of equations taking into account all phenomena associated with the thermal wave generation within the sample. Using a least square fitting routine, the unknown thickness of each layer can be calculated. In an alternative method of the subject invention, a profile of the thermal characteristics of a sample caused, for example, by dopants or lattice defects can be determined as a function of depth. In the latter case, the theoretical model is divided into a number of hypothetical layers of known thickness. Using a least-squares fitting routine on data obtained at various modulation frequencies, the thermal characteristics, and in particular the thermal conductivity of the hypothetical layers can be determined. The thermal conductivities can be related to the concentration of dopants or lattice defects to provide an accurate depth profile of the sample.

Appendix A
Thermal-wave depth-profiling: Theory
Summary

A one-dimensional model for thermal-wave depth-profiling provides expressions for the temperature at the surface of the sample and for the thermoelastic response beneath the surface. The model shows that elastic wave interference effects produce significant differences between samples with mechanically free and constrained surfaces, and that thermal-wave images of thermal conductivity variations are obtainable from the thermoelastic signal only if the front surface is mechanically free. The case of subsurface heating shows that for heating occurring at depths of more than a few thermal diffusion lengths, the thermoelastic signal becomes independent of thermal conductivity variations. This has important implications for thermal-wave image range and resolution.

I. Introduction

It has been suggested that one can, with the photoacoustic technique, obtain information about the optical, and/or thermal characteristics of a sample as a function of depth beneath its surface[1]. This nondestructive depth-profiling is a unique capability of photoacoustics because of the critical damping of the thermal waves that are generated in the process. Although there has been some experimentation on photoacoustic, or thermal-wave, depth-profiling[1,2], this capability has not been extensively exploited, primarily because of the lack of adequate theoretical models. There have been some theoretical analyses of thermal-wave depth-profiling[3,4] but these appear to suffer from several inadequacies. The advent of thermal-wave imaging and microscopy, with its capabilities for subsurface flaw detection and for three-dimensional imaging of semiconductor dopant regions, has generated a need for a rigorous, yet usable, analysis of thermal-wave depth-profiling.

Thermal-wave imaging of subsurface features has been performed with gas-microphone photoacoustics[5,6], with photothermal techniques[7,8] and with piezoelectric photoacoustics[9]. These initial experiments were all performed at low modulation frequencies, and since the resolution in a thermal-wave image is set both by the spot size of the illuminating beam, and by the thermal wavelength[10,11] truly microscopic thermal-wave imaging is possible only at high modulation frequencies. Such high resolution thermal-wave images are presently possible only with piezoelectric photoacoustic detection, and have been demonstrated both with laser beam[12] and with electron beam scanning[13,14].

Experimentally, thermal-wave imaging performed with piezoelectric detection bears an apparent resemblance to thermoelastic ultrasonic imaging. White[15] first investigated the phenomenon of thermoelastically generated ultrasonic waves, and since then there have been several applications of the phenomenon, both for materials evaluation[16,17] and for ultrasonic imaging[18–21]. Thermal-wave imaging is, however, not the same as thermoelastic ultrasonic imaging. In thermal-wave imaging it is the interactions of the thermal-waves with the thermal features in the sample that produce the main image features, while in thermoelastic ultrasonic imaging it is the interactions of the acoustic waves with the elastic features in the sample that produce the principal image features. Thus, as defined above, a thermal-wave image can be obtained either through a measurement of surface temperature variations, as in the cases of gas-microphone photoacoustics and photothermal detection, or through a measurement of the subsurface thermoelastically generated ultrasonic waves. The common element between these three quite different detection techniques is that the thermal-wave image arises from the interaction of the thermal waves with the sample's thermal features. Thus such aspects as depth-profiling and the imaging of dopant regions in semiconductors[22] are unique features of thermal-wave imaging and are not possible in thermoelastic ultrasonic imaging. The depth-profiling capability arises, as we have already stated, from the critically-damped nature of the thermal waves, and dopant regions in semiconductors are visible to thermal waves because they undergo noticable changes in thermal conductivity while still having essentially unaltered elastic properties.

The generation of thermoelastic waves has been treated theoretically by several authors[15,20,23] as has the case of beam-induced thermal transients[24,25]. However, neither the thermal-wave imaging aspects in general, nor the depth-profiling aspect in particular, have been fully addressed in a model that considers both the effects on surface temperature and on thermoelastic response. The theory presented here attempts to present such a model, one that is applicable to gas-microphone, photothermal and piezoelectric thermal-wave experiments. In the latter case the important role of sample elastic properties is presented in the initial parts of the theory. However, for the sake of a more simplified analysis and a cleaner physical interpretation of the results, the theory is fully developed for the special case where the sample has uniform elastic properties. By so doing, we more clearly show the inherent similarities and differences between thermal-wave imaging performed by measuring surface temperatures, as in gas-microphone or photothermal experiments, and thermal-wave imaging performed by measuring thermoelastic response in the sample. The special case of a sample with nonuniform thermal but with uniform elastic properties is moreover appropriate for what is probably the most important application of thermal-wave depth-profiling, that is, the profiling of dopant concentrations in semiconductors. In addition, the theory can be used to model the potentially powerful technique where both the phase as well as the frequency are varied. We have also considered the case where the energy absorption and subsequent heating occurs at some depth beneath the surface of the sample. The results obtained from the analysis have important implications to thermal-wave resolution and image range.

## II. Theory

Consider a plane heat source with sinusoidal time dependence, $Q_o e^{i\omega t}$, at the surface, $x=x_o=0$, of a semi-infinite elastic body. At any practical frequency, we will be dealing with the uncoupled thermo-elastic problem and for this we need to first solve the homogeneous one-dimensional heat equation,

$$\frac{d^2T}{dx^2} - q^2 T = 0 \tag{1}$$

for the temperature, $T$, as a function of position, $x$, subject to the boundary condition,

$$-\kappa \frac{dT}{dx}\bigg|_{x=0} = Q_o \tag{2}$$

In Eq. (1), $q$ is a thermal wave vector defined by

$$q = (1+i)\left(\frac{\omega \rho C}{2\kappa}\right)^{1/2} \tag{3}$$

$$= (1+i)/\mu$$

where $\rho$ is the density, $C$ the specific heat, and $\kappa$ the thermal conductivity and $\mu$ is commonly referred to as the thermal diffusion length.

Let us consider the sample to be a thermally inhomogeneous system where $q$ depends on $x$. The resulting solution for $T$ for this case is in general quite complicated. A straightforward and illuminating approach to this problem is to model the inhomogeneous portion of the material with a system of N plane homogeneous layers, as depicted in Fig. 4, each of whose thermal properties correspond to some average over layer thickness of the material's thermal properties. The temperature within the nth layer is then given by

$$T_n(x) = A_n e^{-q_n x} + B_n e^{q_n x} \tag{4}$$

where

$$q_n = (1+i)\left(\frac{\omega \rho_n C_n}{2\kappa_n}\right) = (1+i)/\mu_n$$

and the solutions within adjacent layers are related through the boundary conditions,

$$T_n|_{x=x_n} = T_{n+1}|_{x=x_n} \tag{5}$$

$$\kappa_n \frac{dT_n}{dx}\Bigg|_{x=x_n} = \kappa_{n+1} \frac{dT_{n+1}}{dx}\Bigg|_{x=x_n}$$

let us define a characteristic thermal-wave impedance of the nth layer

$$Z_n = \kappa_n q_n \tag{6}$$

and a thermal-wave input impedance, $Z_n^{in}$, to the nth layer by

$$Z_n^{in} = -\frac{\kappa_n \dfrac{dT_n}{dx}}{T_n}\Bigg|_{x=x_n} \tag{7}$$

then applying the boundary conditions, we obtain the recursion formulae,

$$Z_n^{in} = Z_n\left[\frac{Z_{n+1}^{in} + Z_n \tanh q_n d_n}{Z_n + Z_{n+1}^{in} \tanh q_n d_n}\right] \tag{8}$$

and

$$A_{n+1} = A_n \frac{Z_n}{Z_{n+1}}\left(\frac{Z_{n+1} + Z_{n+1}^{in}}{Z_n + Z_{n+1}^{in}}\right) e^{-(q_n - q_{n+1})x_n} \tag{9}$$

where $d_n$ is the layer thickness, $d_n = x_n - x_{n-1}$. Finally, within each layer, the coefficients in Eq. (4), $B_n$ and $A_n$ are related by,

$$\frac{B_n}{A_n} = \left(\frac{Z_n - Z_n^{in}}{Z_n + Z_n^{in}}\right) e^{-2q_n x_{n-1}} = \left(\frac{Z_n - Z_{n+1}^{in}}{Z_n + Z_{n+1}^{in}}\right) e^{-2q_n x_n} \tag{10}$$

Equations (4—10) completely specify the temperature at every point in the material and will be used later in our calculations of the thermoelastic response. Before proceeding with that analysis, we should note that the gas-microphone experiment can also be analyzed with these results. That experiment is essentially a measurement of the surface temperature, $T_o = T_1(x_o)$, which only depends on $Q_o$ and $Z_1^{in}$, i.e.,

$$T_o = \frac{Q_o}{Z_1^{in}} \tag{11}$$

and $Z_1^{in}$ in turn depends on all of the other $Z_n^{in}$'s through the recursion relation (8).

Having a complete knowledge of the temperature, we can now obtain the thermoelastic response by solving the elastic wave equation,

$$\frac{d^2\phi}{dx^2} + k^2\phi = \gamma T \tag{12}$$

where $\phi$ is the elastic displacement potential and $\gamma$ is the thermoelastic constant defined below. The displacement, u, and stress, $\sigma$, are obtained from $\phi$ as follows,

$$u = \frac{d\phi}{dx}$$

$$\sigma_{xx} = -\rho\omega^2\phi \tag{13}$$

and

$$\sigma_{yy} = \sigma_{zz} = -\frac{E}{1+v}\left[\frac{v}{1-2v}k^2\phi + 2\ \alpha T\right]$$

where E is Young's modulus, v is Poisson's ratio, and $\alpha$ is the linear thermal expansion coefficient. Also in Eq. (12), k is the elastic wave vector,

$$k = \omega\left[\frac{1}{\rho}\left(\frac{1-v}{1+v}\right)\frac{E}{1-2v}\right]^{1/2} \tag{14}$$

and $\gamma$ is a thermoelastic constant,

$$\gamma = \frac{1+v}{1-v}\alpha \tag{15}$$

The solution of Eq. (12) can be expressed as the integral,

$$\phi(x) = \int dx'\ g(x,x')\ \gamma(x')\ T(x') \tag{16}$$

where $g(x,x')$ is the Green's function describing the elastic response at x to a $\delta$-function source at $x'$. That is, g is a solution of the equation,

$$\frac{d^2g}{dx^2} + k^2g = \delta(x-x') \tag{17}$$

and satisfies whatever boundary conditions are imposed on the system. Since the purpose of this paper is to show the effects of thermal properties on the thermoelastic response, we will assume constant elastic properties throughout the material. The problem is then a simple one-dimensional elastic half-space problem with the well-known solution[26],

$$g(x,x') = -\frac{1}{2ik}\left[e^{-ik|x-x'|} \pm e^{-ik|x+x'|}\right] \tag{18}$$

The second term on the right hand side of Eq. (18), $\pm e^{-ik|x+x'|}$, ensures that the boundary conditions at x=0 are satisfied: $+e^{-ik|x+x'|}$ corresponding to the rigid boundary condition, u(0)=0, and $-e^{-ik|x+x'|}$ corresponding to the free boundary condition, $\sigma_{xx}(0)=0$. In all practical applications, the frequencies are low enough that the elastic wave vector will always be much smaller than any of the thermal wave vectors, i.e., $k \ll q_n$. Furthermore, the thermal wave, being highly damped, becomes insiginificant after but a few thermal wavelengths, so that in Eq. (16), $kx' \ll 1$ throughout the region in which the temperature is significant. Finally, in this work we are interested in the thermoelastic response for large x, well beyond the region of any temperature change, that is, for $x > x'$. An excellent approximation to Eq. (18) is then,

$$g(x,x') = \begin{cases} -\dfrac{1}{ik}e^{-ikx}, & \text{rigid boundary} \\[2ex] -x'e^{-ikx}, & \text{free boundary} \end{cases} \tag{19}$$

Since $x' \ll 1/k$, the rigid boundary condition gives rise to a much larger thermoelastic response than does the free boundary condition. This was previously noted by White[15]. The physical interpretation of this effect is as follows. The temperature at each point in the material generates two waves, $g(x,x')$, propagating to the right and left of the source. When the left-going wave strikes the boundary, x=0, it is reflected and interfers constructively or destructively with the original right-going wave, depending on the boundary condition at x=0. For the rigid boundary there is no phase change upon reflection and since $kx' \ll 1$, the two right-going waves are essentially in phase interfering in a constructive manner. On the other hand, the free boundary results in a phase change upon reflection and therefore destructive interference occurs. However, the interference is not completely destructive because of the small additional phase lag, $2kx'$, between the reflected and unreflected waves. As we shall see, it is the small differential signal resulting from this phase lag that produces the important depth-capability of thermoelastic thermal-wave imaging.

Using Eq. (19) for the Green's function in Eq. (16), we obtain for the thermoelastic response,

$$\phi(x)= \begin{cases} -\dfrac{1}{ik}e^{-ikx}\int dx'\gamma(x')\,T(x'), & \text{rigid} \\ \\ -e^{-ikx}\int dx'x'\gamma(x')\,T(x'), & \text{free.} \end{cases} \tag{20}$$

For a system of N thermal layers we can write

$$\phi= \sum_{n=1}^{N} \phi_n \tag{21}$$

where $\phi_n$ is the contribution from the nth layer,

$$\phi_n(x)= \begin{cases} -\dfrac{\gamma_n}{ik}\,e^{-ikx}\displaystyle\int_{x_{n-1}}^{x_n} dx'\,T_n(x'), & \text{rigid} \\ \\ -\gamma_n\,e^{-ikx}\displaystyle\int_{x_{n-1}}^{x_n} dx'\,x'\,T_n(x'), & \text{free,} \end{cases} \tag{22}$$

and $T_n$ is obtained using Eqs. (4—10). From $\phi(x)$ we can obtain either the displacement u or the stresses $\sigma_{xx}$, $\sigma_{yy}$, or $\sigma_{zz}$ using Eq. (13).

III. Two-layer example

The results of the Theory Section can best be appreciated with the consideration of a specific example. We consider the two-layer system shown in Fig. 1, with the second layer much thicker than the first layer, and extending well beyond the range of any thermal waves.

Using Eqs. (8) and (11) we find the surface temperature $T_o$ given by

$$T_o=\frac{Q_o}{Z_1}\left[\frac{Z_1+Z_2\tanh q_1 d}{Z_2+Z_1\tanh q_1 d}\right] \tag{23}$$

From this, then, we can obtain the response of a gas-microphone system for the two-layer sample. Note that Eq. (23) is exactly equivalent to the expression for $T_o$ obtained from the Rosencwaig-Gersho theory[27] for the type of sample considered here.

Next, from Eqs. (4—10) and (21—22), we obtain the thermoelastic response,

$$\phi_u(x)=\frac{\gamma Q_o}{\omega\rho C}\frac{e^{-ikx}}{k} \tag{24}$$

for the case of a rigid front surface boundary, and

$$\phi_o(x)=\frac{\gamma Q_o}{\omega\rho C}\frac{e^{-ikx}}{iq_1}\left\{\frac{Z_1}{Z_1^{in}} + \left(\frac{Z_2^2-Z_1^2}{Z_1Z_2}\right)\left[\frac{1+\tanh q_1 d}{1+\dfrac{Z_1}{Z_2}\tanh q_1 d}\right]e^{-q_1 d}\right\} \tag{25}$$

for the case of a free front surface boundary. Equation (24) is equivalent to White's[15] result for a rigid boundary.

Note that we are here considering a sample with an inhomogeneity only in the thermal conductivity. For such a sample, Eq. (24) shows that the thermoelastic response when the front surface is rigidly clamped will be independent of $\kappa$, and thus no information about the second layer can be obtained for such a sample under rigid boundary conditions. When the front surface (heated surface) is free, the thermoelastic signal

12

will now be much smaller, but it will contain information about the second layer. Thus, only the surface temperature $T_o$ and the free surface thermoelastic signal $\phi_\sigma$ provide information about the second layer.

We should point out at this time that Wetsel, in his treatment[23], has developed a similar two-medium one dimensional model for thermoelastic wave generation where the emphasis is on the efficiency of elastic wave generation rather than on imaging of subsurface thermal features. In his work, Wetsel has shown that air and vacuum at the front interface of the sample produce quite different results. In the analysis presented here, we assume a vacuum condition only. A future paper will discuss our analysis with respect to air at the interface.

Let us now consider two limiting cases, one at low frequencies where we have long thermal wavelengths and $d/\mu < 1$, and the other at high frequencies where we have short thermal wavelengths and $d/\mu > 1$. For the long thermal wavelength limit with $d/\mu < 1$, we find

$$T_o = \frac{Q_o}{Z_2} \left[ 1 + q_1 d \left( \frac{Z_2^2 - Z_1^2}{Z_1 Z_2} \right) \right] \qquad (26)$$

In the thermoelastic response we find

$$\phi_\sigma(x) = \frac{\gamma Q_o}{\omega \rho C} \frac{e^{-ikx}}{iq_2} \left[ 1 + \frac{(q_1 d)^2}{2} \left( \frac{Z_1^2}{Z_2^2} - 1 \right) \right] \qquad (27)$$

for the free boundary case. Equation (24) holds for the rigid boundary case.

As we said before, the rigid boundary thermoelastic signal provides no information about the second layer, and only the surface temperature $T_o$ and the free surface thermoelastic signal $\phi_\sigma$ provide such information. Note also that in the long thermal wavelength case, $T_o$ varies linearly with $d/\mu$ while $\phi_\sigma$ varies quadratically with $d/\mu$. In general the information that will be desired are the distance d between the two layers and the thermal conductivity $\kappa_2$ of the second layer (or the ratio $Z_2/Z_1$). In examining Eqs. (26) and (27) we see that unambiguous and unique evaluations of d and $\kappa_2$ would be very difficult in the long thermal wavelength limit since here both the magnitude and phase of the signals are determined by terms that are products of d and $\kappa_2$.

In the short thermal wavelength limit $d/\mu > 1$ we find

$$T_o = \frac{Q_o}{Z_1} \left[ 1 + 2 \left( \frac{Z_1 - Z_2}{Z_1 + Z_2} \right) e^{-2q_1 d} \right] \qquad (28)$$

and

$$\phi_\sigma(x) = \frac{\gamma Q_o}{\omega \rho C} \frac{e^{-ikx}}{iq_1} \left[ 1 + 2 \left( \frac{Z_2}{Z_1} - 1 \right) e^{-q_1 d} \right] \qquad (29)$$

Equation (24) again applies for the rigid boundary case.

Unlike the long thermal wavelength case, the short thermal wavelength situation provides an opportunity for an unambiguous determination of both d and $\kappa_2$ by measuring magnitude and phase. This is possible since there are now no phase terms that are products of both $\kappa_2$ and d, and in fact, there are no phase terms that are functions of $\kappa_2$. Thus, the real parts of Eqs. (28) and (29) can be written as

$$T_o = T_o'[1 + R(\kappa_2) e^{-2d/\mu_1} \cos(\psi_1 - 2d/\mu_1)] \qquad (30)$$

and

$$\phi_\sigma(x) = \phi_\sigma'(x)[1 + T(\kappa_2) e^{-d/\mu_1} \cos(\psi_2 - d/\mu_1)] \qquad (31)$$

In these equations $T_o'$ and $\phi_\sigma'$ represent the signal amptitudes that we would obtain with no second layer present, and $\psi_1$ and $\psi_2$ the corresponding phases. The quantity $R(\kappa_2) e^{-2d/\mu_1}$ represents the correction to the $T_o'$ term arising from the reflection of the thermal wave from the second layer, while the $T(\kappa_2) e^{-d/\mu_1}$ term represents the correction to the $\phi_\sigma'(x)$ term arising from the transmission of the thermal wave into the second layer. These magnitude corrections are functions of both $\kappa_2$ and d. On the other hand, the phase correction terms are functions of d only. Thus, by measuring magnitude and phase both $\kappa_2$ and d can be determined uniquely. If one has N layers in the sample, then N frequencies would be needed to define the entire set of $d_n$ and $\kappa_n$.

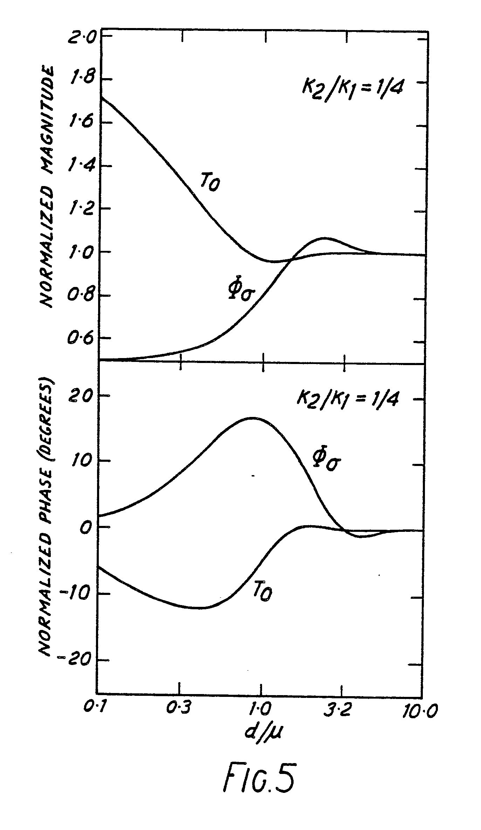

In Figs. 2 and 5, we present some graphical illustrations of the surface temperature and thermoelastic signals by showing how the total magnitude and phase of the $T_o$ and $\phi_\sigma$ signals vary with frequency for the two cases of $\kappa_2/\kappa_1 = 4$ and $\kappa_2/\kappa_1 = 0.25$.

The signals have all been normalized to a single layer signal, that is, we plot $M_2/M_1$ where $M_2$ and $M_1$

**0 097 473**

are the magnitudes of either the surface temperature or the thermoelastic response for the two-layer ($M_2$) and single-layer ($M_1$) cases. The symbols $T_o$ and $\phi_o$ identify the curves corresponding to the front surface temperature and free surface thermoelastic signals respectively. The phase has also been normalized by subtracting the phase for the single-layer case, i.e., $\psi=\psi_2-\psi_1$. The frequency range is also normalized and runs from $d/\mu_1=0.1$ to $d/\mu_1=10$. We can see from Figs. 2 and 5, that the thermoelastic response is more sensitive to the presence of the second layer than the surface temperature response. In addition, the presence of thermal-wave interference as evidenced by the oscillations in the magnitudes, when $d/\mu_1$ is between 1 and 3, is much more evident in the thermoelastic signal. Both of these effects arise from the fact that the thermoelastic signal from the second layer is attenuated by $e^{-d/\mu_1}$ while for the surface temperature, the second layer signal undergoes a much greater $e^{-2d/\mu_1}$ attenuation. This is, of course, a result of the transmission nature of the thermoelastic response compared to the reflection nature of the surface temperature response.

IV. Subsurface heating

Our treatment to this point has assumed that all of the energy absorption and initial heating occurs at the front surface. This is, of course, somewhat unrealistic since energy absorption and initial heating will always occur down to some depth beneath the surface.

The case of subsurface heating is an important one, not only because it is more realistic, but also because it has important implications for thermal-wave resolution and image depth. For example, in some recent work on thermal-wave electron imaging, Cargill has suggested[14] that the image resolution is set not only by the thermal wavelength and the size of the energy beam at the surface, but also by the total beam broadening that occurs as the electron beam penetrates into the sample.

To examine this situation we consider a simple three-layer sample as shown in Fig. 6 where the heating is assumed to occur at a subsurface layer $x=x_o$, and that the distance between the front surface, $x=0$, and $x=x_o$ is $d_o$. We already know that only a stress-free front surface will produce thermoelastic signals that provide thermal-wave images due to variations in thermal conductivity. Thus we will assume in the sample of Fig. 6 that the front surface is stress-free.

Proceeding as before in the case of heating at the surface, we first find the temperature at every point within the material. For subsurface heating, $T(x)$ is still given by Eq. (4) with Eqs. (8—10) valid for $n\geq1$. For $n=0$ we have

$$\frac{A_1}{A_0} = \left(\frac{Z_1+Z_1^{in}}{Z_1}\right)\cosh q_o d_o \; e^{q_1 d_o} \tag{32}$$

with

$$A_0=\frac{Q_o \; \text{sech} \; q_o d_o}{2 \; [Z_1^{in}+Z_o \; \tanh \; q_o d_o]} \tag{33}$$

and

$$\frac{B_o}{A_o}=1 \tag{34}$$

for the surface temperature, $T_o^s$, we obtain

$$T_o^s=T_o e^{-q_o d_o} \left[\frac{1+\tanh \; q_o d_o}{1+\dfrac{Z_o}{Z_1^{in}}\tanh \; q_o d_o}\right] \tag{35}$$

where $T_o$ is the result obtained earlier for heating at the surface given by Eq. (11). This result of course reduces to $T_o$ when $d_o=0$, and goes to zero for large $d_o$.

Knowing the temperature, we can now proceed exactly as before using the Green's function given by Eq. (19) in the expressions for the thermoelastic response, Eqs. (20—22). Applying this analysis to the three-layer example shown in Fig. 6, we obtain

14

$$\phi_o^s(x) = \frac{\phi_o(x)}{1 + \dfrac{Z_o}{Z_1^{in}} \tanh q_o d_o} + \frac{i\gamma Q_o}{\omega \rho C} d_o e^{-ikx} \left\{ 1 - \frac{1}{q_1 d_o} \left(\frac{Z_o}{Z_1}\right)^2 \left[ \frac{1 - \text{sech } q_o d_o}{1 + \dfrac{Z_o}{Z_1^{in}} \tanh q_o d_o} \right] \right. \tag{36}$$

where $\phi_o^s(x)$ denotes the thermoelastic response for subsurface heating and $\phi_o(x)$ is the result for the two-layer surface heating problem in Fig. 2 given by Eq. (25). The second term in Eq. (36) is a small correction term as long as $d_o < \mu_o$. However when $d_o > \mu_o$, the second term becomes comparable to and then quickly larger than the first term. Finally when $d_o >> \mu_o$ but still $< k^{-1}$, the thermoelastic signal is given by

$$\phi_o^s(x) = \frac{i\gamma Q_o}{\omega \rho C} d_o e^{-ikx} \tag{37}$$

This expression is essentially identical to that for the rigid boundary case, Eq. (24), except that $d_o$ is used in place of $1/k$. Thus $\phi_o^s(x)$ will be smaller in magnitude than $\phi_u(x)$, but just as with $\phi_u(x)$, $\phi_o^s(x)$ will also be completely independent of the thermal conductivity.

The results summarized in Eqs. (36) and (37) are most significant. They indicate that although energy absorption and heating beneath the surface will produce thermoelastic signals, these signals will not image any variations in thermal conductivity when the heating occurs more than a few thermal diffusion lengths beneath a stress-free mechanical surface. This in turn implies that where thermal-wave images are dominated by variations in the thermal conductivity, such images will have a resolution determined by the thermal wavelength and by the size of the incident beam during its propagation within a thermal wavelength beneath the surface. The image depth is also limited to only a few thermal diffusion lengths (~one thermal wavelength) beneath the surface. This is a result independent of the total depth of penetration of the heating beam, and thus the resolution is independent of the amount of beam spreading that occurs at depths beyond the first few thermal diffusion lengths.

It is important to note that the only assumption made in deriving this result is the reasonably realistic one that the major thermal variation in the sample is in its thermal conductivity. Note also that in the limit $d_o = 0$, we recover our earlier results for heating occurring at the front surface.

## V. Conclusions

We have derived a model for thermal-wave depth-profiling that is applicable both to conventional gas-microphone and photothermal thermal-wave measurements where the measured parameter is the periodic temperature at the surface of the sample, and to piezoelectric photoacoustic and thermal-wave experiments where the signal is the result of a subsurface thermoelastic response. We have shown that the significant differences in thermal-wave imaging capability between samples with mechanically free and constrained surfaces, first predicted by White[15], for thermoelastic ultrasonic generation only, can be analyzed in terms of wave interference effects. Mechanically constrained surfaces produce greater thermoelastic signals but these signals are independent of variations in thermal conductivity, and thus cannot generate thermal-wave images of such variations. Mechanically free surfaces produce smaller signals but these signals do provide images of variations in thermal conductivity. We also find that the thermoelastic signal is a more sensitive measure of any subsurface variations in thermal conductivity than the surface temperature signal.

We have used as a model a sample that has nonuniform thermal but uniform elastic properties since it provides a simpler analysis and a cleaner interpretation. It also clearly shows both the inherent similarities and the differences between thermal-wave imaging performed by measuring surface temperatures, as in gas-microphone and photothermal experiments, and thermal-wave imaging performed by measuring the thermoelastic response in the sample. A model of a sample with nonuniform thermal and uniform elastic properties is moreover appropriate for the most important application of thermal-wave depth-profiling of dopants in semiconductors. For such a model at any given modulation frequency, only two unknown parameters, such as a length and a thermal conductivity, can be derived from amplitude and phase measurements of either the thermoelastic or the surface temperature signals. When more parameters need to be determined, more frequencies must be used, and if an accurate depth profile is to be obtained thermal-wave signals at several frequencies must be measured. Furthermore, unambiguous determinations of layer thicknesses and thermal conductivities can best be obtained at frequencies that produce thermal diffusion lengths shorter than the thicknesses to be determined.

We have also considered the case where the heating may occur beneath the surface of the sample. We find that as long as the heating occurs within one thermal diffusion length beneath the sample surface, the results are not significantly different from the case of front surface heating. However, for heating occurring at greater depths, the thermoelastic signals become independent of variations in thermal conductivity and thus will not provide thermal-wave images of such variations. Thus in thermal-wave electron or laser

# 0 097 473

microscopy, the imaging depth is within a few thermal diffusion lengths of the surface even though the electron or laser beam may penetrate much deeper. Furthermore, thermal-wave resolution will not be degraded by any beam spreading that occurs beyond this thermal-wave imaging depth.

Finally, we point out that although the model in this paper is one-dimensional, we expect that, just as in photoacoustic theory[28], three-dimensional treatments will not significantly alter the physical understanding of thermal-wave imaging derived from this one-dimensional treatment. It is true that edge effects can produce signal changes and that these edge effects can only be analyzed with a three-dimensional theory. However, an analysis of these edge effects indicates that their affect on the signal is a function of the ratio of the thermal diffusion length to the beam spot size. Thus in the photothermal work of Murphy and Aamodt[29], the edge effects are particularly strong because, at the low modulation frequencies used, the thermal diffusion length is much greater than the diameter of the focused beam spot. On the other hand, at the high modulation frequencies employed in the high-resolution thermal-wave microscopy of interest here, the thermal diffusion lengths are comparable to or smaller than the beam spot size and the edge effects can be expected to be relatively minor. This appears to be true in fact, since in none of the high-resolution experiments reported by Rosencwaig and his colleages[12,13,22,30−32], or by Cargill[14,33], are there any indications of noticable edge effects. Thus, we believe that this one-dimensional theory provides an adequate, if not complete, representation of the physical processes occurring during thermal-wave imaging.

References

1. A. Rosencwaig, *Photoacoustics and Photoacoustic Spectroscopy*, Wiley Interscience, New York, 1980.
2. M. J. Adams and G. F. Kirkbright, Analyst, *102*, 678 (1977).
3. M. A. Afromowitz, P. S. Yeh and S. S. Yee, J. Appl. Phys. *48*, 209 (1977).
4. A. Rosencwaig, J. Appl. Phys. *49*, 2905 (1978).
5. Y. H. Wong, R. L. Thomas and J. J. Pouch, Appl. Phys. Lett. *35*, 368 (1979).
6. G. Busse, *First International Topical Meeting on Photoacoustic Spectroscopy,* paper WB5P, Optical Society of America, 1979.
7. M. Luukkala, *Scanned Image Microscopy*, (E. A. Ash, ed.), p. 273, Academic Press, New York, 1980.
8. J. C. Murphy and L. C. Aamodt, J. Appl. Phys. *51*, 4580 (1980).
9. G. Busse and A. Rosencwaig, Appl. Phys. Lett. *36*, 815 (1980).
10. R. L. Thomas, J. J. Pouch, Y. H. Wong, L. D. Favro, P. K. Kuo and A. Rosencwaig, J. Appl. Phys. *51*, 1152 (1980).
11. A. Rosencwaig, J. Appl. Phys. *51*, 2210 (1980).
12. A. Rosencwaig and G. Busse, Appl. Phys. Lett. *36*, 725 (1980).
13. E. Brandis and A. Rosencwaig, Appl. Phys. Lett. *37*, 98 (1980).
14. G. S. Cargill III, Nature *286*, 691 (1980).
15. R. M. White, J. Appl. Phys. *34*, 3559 (1963).
16. C. M. Percival and J. A. Cheney, Exp. Mech. *9*, 49 (1969).
17. C. A. Calder and W. W. Wilcox, Rev. Sci. Instrum. *45*, 1557 (1974).
18. R. J. von Gutfeld and R. L. Melcher, Appl. Phys. Lett. *33*, 257 (1977).
19. R. J. von Gutfeld and R. L. Melcher, Mater. Eval. *35*, 97 (1977).
20. R. J. von Gutfeld and H. F. Budd, Appl. Phys. Lett. *34*, 617 (1979).
21. H. K. Wickramasinghe, R. C. Bray, V. Jipson, C. E. Quate and J. R. Salcedo, Appl. Phys. Lett. *33*, 923 (1978).
22. A. Rosencwaig and R. M. White, Appl. Phys. Lett. *38*, 165 (1981).
23. G. C. Wetsel, Jr. *Proc. of the 1980 Ultrasonics Symposium*, p. 645, IEEE Press, 1980.
24. T. P. Liu, IBM Journal of Res. and Dev. *11*, 527 (1967).
25. K. Brugger, J. Appl. Phys. *43*, 577 (1972).
26. P. Morse and H. Feshbach, *Methods of Theoretical Physics,* P. 810, Part 1, McGraw-Hill Book Company, New York, 1953.
27. A Rosencwaig and A. Gersho, J. Appl. Phys. *47* 64 (1976).
28. F. A. McDonald, Appl. Phys, Lett. *36*, 123 (1980).
29. J. C. Murphy and L. C. Aamodt, *Second International Topical Meeting on Photoacoustic Spectroscopy,* Paper THA1, Optical Society of America, 1981.
30. A. Rosencwaig, *Proc. 1980 Ultrasonics Symposium*, p. 600, IEEE Press, 1980.
31. A. Rosencwaig, Elect. Lett. *16*, 928 (1980).
32. A. Rosencwaig, *Scanned Image Microscopy* (E. A. Ash, ed.) p. 291, Academic Press, New York, 1980.
33. G. S. Cargill, III, *Scanned Image Microscopy* (E. A. Ash, ed.) p. 319, Academic Press, New York, 1980.

**Claims**

1. A method for determining the thickness of a layer or layers of material deposited on a substrate by measuring either the phase or magnitude parameters of thermal wave signals generated by a focused periodic heat source, comprising the steps of:

16

focusing said periodic heat source on the layer or uppermost layer deposited on said substrate;

measuring the value of one of said parameters of the thermal wave signals at a plurality of selected modulation frequencies of said source; and determining the thickness from the measured values, characterised in that the number of modulation frequencies selected is greater than the number of layers whose thickness is to be determined; and by the steps of:

normalizing the measured value of said parameter of each modulation frequency selected relative to the value of said parameter determined for a reference sample; and

comparing said normalized values with expected normalized values.

2. A method according to claim 1, characterised in that the thermal wave signals are measured with a means that detects the oscillating temperature of the heated spot on the surface of the uppermost layer deposited on the substrate.

3. A method according to claim 2, characterised in that said detection means includes a photoacoustic cell apparatus.

4. A method according to claim 2, characterised in that said detection means is defined by a laser which senses the periodic heating of a medium in contact with the heated spot on the surface of the uppermost layer deposited on the substrate.

5. A method according to claim 2, characterised in that said detection means is defined by an infrared detector which senses the periodic infrared emissions from the heated spot on the surface of the uppermost layer deposited on the substrate.

6. A method according to claim 1, characterised in that said thermal wave signals are measured with a means that detects the oscillating thermal displacement of the surface of the uppermost layer deposited on the substrate at the heated spot.

7. A method according to claim 6, characterised in that said detection means includes a laser probe.

8. A method according to claim 6, characterised in that said detection means includes a laser interferometer.

9. A method according to claim 1, characterised in that the thermal wave signals are measured with a means which detects the acoustic signals that are generated by the thermal waves.

10. A method according to claim 9, characterised in that said detection means includes an ultrasonic transducer.

11. A method according to claim 9, characterised in that said detection means includes a laser probe.

12. A method according to claim 9, characterised in that said detection means includes a laser interferometer.

13. A method according to claim 1, characterised in that the parameter measured is the phase of the thermal wave signals and the values are normalized by subtracting the value of the phase determined for the reference sample from the value of the phase of the thermal wave signals.

14. A method according to claim 1, characterised in that the parameter measured is the magnitude of the thermal wave signals and wherein the values are normalized by taking a ratio of the value obtained from the reference sample and the value for the thermal wave signals.

15. A method according to claim 1, characterised in that the comparison of the measured normalized values to the expected normalized values is done by a least-squares fitting routine.

16. A method for determining the change in thermal characteristics as a function of depth in a non-uniform sample having impurities or defects therein by measuring either the phase or magnitude parameter of thermal wave signals generated in said sample by a focused period heat source, comprising the steps of:

focusing said periodic heat source on said non-uniform sample;

measuring the value of one of said parameters of said thermal wave signal generated in said non-uniform sample at a plurality of selected modulation frequencies; and determining the said change from the measured values; characterised by the steps of:

normalizing the measured value of said parameter at each modulation frequency relative to the value of said parameter determined for a reference sample; and

comparing said normalized values with expected normalized values derived from a model depicting the thermal process in said samples, with said model for the non-uniform sample being characterised as divided into a plurality of hypothetical layers each having the same thickness, with the number of layers being less than the number of modulation frequencies selected, whereby the thermal characteristics of the hypothetical layers and the depth variation of these thermal characteristics in the non-uniform sample can be determined.

17. A method according to claim 16, characterised in that the thermal characteristics are the thermal conductivities of the hypothetical layers and further including the step of correlating the concentration of impurities or defects in the sample to variations in the thermal conductivity such that a profile of the impurities or defects can be obtained as a function of depth.

18. A method according to claim 16, characterised in that the thermal wave signals are measured with a means that detects the oscillating temperature of the heated spot on the surface of said non-uniform sample.

19. A method according to claim 18, characterised in that said detection means includes a photoacoustic cell apparatus.

20. A method according to claim 18, characterised in that said detection means is defined by a laser which senses the periodic heating of a medium in contact with the heated spot on the surface of said non-uniform sample.

21. A method according to claim 18, characterised in that said detection means is defined by an infrared detector which senses the periodic infrared emission from the heated spot on the surface of said non-uniform sample.

22. A method according to claim 16, characterised in that said thermal wave signals are measured with a means that detects the oscillating thermal displacement of the surface of said non-uniform sample at the heated spot.

23. A method according to claim 22, characterised in that said detection means includes a laser probe.

24. A method according to claim 22, characterised in that said detection means includes a laser interferometer.

25. A method according to claim 16, characterised in that the thermal wave signals are measured with a means which detects the acoustic signals that are generated by the thermal waves.

26. A method according to claim 25, characterised in that said detection means includes an ultrasonic transducer.

27. A method according to claim 25, characterised in that said detection means includes a laser probe.

28. A method according to claim 25, characterised in that said detection means includes a laser interferometer.

29. A method according to claim 16, characterised in that the parameter measured is the phase of the thermal wave signals and the values are normalized by subtracting the value of the phase of the reference sample from the phase of the non-uniform sample.

30. A method according to claim 16, characterised in that the parameter measured is the magnitude of the thermal wave signals and wherein the values are normalized by taking a ratio of the value obtained from the reference sample and the value obtained from the non-uniform sample.

31. A method according to claim 16, characterised in that the comparison of the measured normalized values with the normalized values derived from the model is done by a least squares fitting routine.

**Patentansprüche**

1. Verfahren zur Bestimmung der Dicke einer Materialschicht oder von Materialschichten, die auf ein Substrat niedergeschlagen sind, durch Messung entweder der Phasen- oder Amplituden-Parameter von Wärmeschwingungssignalen, die durch eine fokussierte, periodische Wäremquelle erzeugt sind, bestehend aus folgenden Schritten:

Fokussieren der periodischen Wäremquelle auf die Schicht oder oberste Schicht, die auf dem Substrat niedergeschlagen ist;

Messen des Wertes eines der Parameter der Wärmeschwingungssignale bei wenigsten einer ausgewählten Modulationsfrequenz der Quelle; und Bestimmen der Dicke aus den gemessenen Werten, dadurch gekennzeichnet, daß die Anzahl der ausgewählten Modulationsfrequenzen größer ist als die Anzahl der Schichten, deren Dicke zu bestimmen ist, und durch folgende Schritte:

Normieren des gemessenen Wertes der Parameter jeder ausgewählten Modulationsfrequenz relativ zum Wert des Parameters, der für eine Bezugsprobe bestimmt ist; und

Vergleichen der normierten Werte mit erwarteten normierten Werten.

2. Verfahren nach Anspruch 1, dadurch gekennzeichnet, daß die Wärmeschwingungssignale mit einer Einrichtung gemessen werden, die die schwingende Temperatur des beheizten Fleckens auf der Oberfläche der obersten auf dem Substrat niedergeschlagen Schicht detektiert.

3. Verfahren nach Anspruch 2, dadurch gekennzeichnet, daß die Detektoreinrichtung eine Vorrichtung mit einer fotoakustischen Zelle aufweist.

4. Verfahren nach Anspruch 2, dadurch gekennzeichnet, daß die Detektoreinrichtung durch einen Laser definiert ist, der die periodische Erwärmung eines Mediums in Kontakt mit dem erwärmten Fleck auf der Oberfläche der obersten auf dem Substrat niedergeschlagenen Schicht abfühlt.

5. Verfahren nach Anspruch 2, dadurch gekennzeichnet, daß die Detektoreinrichtung durch einen Infrarotdetektor definiert ist, der die periodischen Infrarotemissionen von dem beheizten Fleick auf der Oberfläche der obersten auf dem Substrat niedergeschlagenen Schicht abfühlt.

6. Verfahren nach Anspruch 1, dadurch gekennzeichnet, daß die Wärmeschwingungssignale mit einer Einrichtung gemessen werden, die die schwingenden Wärmeverlagerungen der Oberfläche der obersten auf dem Substrat niedergeschlagenen Schicht am beheizten Fleck. detektiert.

7. Verfahren nach Anspruch 6, dadurch gekennzeichnet, daß die Detektoreinrichtung eine Lasersonde aufweist.

8. Verfahren nach Anspruch 6, dadurch gekennzeichnet, daß die Detektoreinrichtung ein Laserinterferometer aufweist.

9. Verfahren nach Anspruch 1, dadurch gekennzeichnet, daß die Wärmeschwingungssignale mit einer Einrichtung gemessen werden, die die akustischen Signale detektiert, die durch die Wärmeschwingungen erzeugt werden.

10. Verfahren nach Anspruch 9, dadurch gekennzeichnet, daß die Detektoreinrichtung einen Ultraschallwandler aufweist.

11. Verfahren nach Anspruch 9, dadurch gekennzeichnet, daß die Detektoreinrichtung eine Lasersonde aufweist.

12. Verfahren nach Anspruch 9, dadurch gekennzeichnet, daß die Detektoreinrichtung ein Laserinterferometer aufweist.

13. Verfahren nach Anspruch 1, dadurch gekennzeichnet, daß der gemessene Parameter die Phase der Wärmeschwingungssignale ist und die Werte dadurch normiert werden, daß der Wert der Phase, der für die Bezugsprobe bestimmt worden ist, vom Wert der Phase der Wärmeschwingungssignale subtrahiert wird.

14. Verfahren nach Anspruch 1, dadurch gekennzeichnet, daß der gemessene Parameter die Amplitude der Wärmeschingungssignale ist und daß die Werte dadurch normiert werden, daß ein Verhältnis des von der Bezugsprobe gewonnenen Wertes zum Wert für die Wärmeschwingungssignale genommen wird.

15. Verfahren nach Anspruch 1, dadurch gekennzeichnet, daß der Vergleich der gemessenen normierten Werte mit den erwarteten normierten Werten nach der Methode der kleinsten Quadrate durchgeführt wird.

16. Verfahren zum Bestimmen der Änderung der thermischen Charakteristiken in Abhängigkeit von der Tiefe in einer ungleichförmigen Probe, in der Verunreinigungen oder Defekte enthalten sind, durch Messen entweder des Phasen- oder Amplituden-Parameters von Wärmeschwingungssignalen, die durch eine fokussierte periodische Wärmequelle in der Probe erzeugt werden, bestehend aus folgenden Schritten:

Fokussieren der periodischen Wärmequelle auf die ungleichförmige Probe;

Messen der Werte eines der Parameter des in der ungleichförmigen Probe erzeugten Wärmeschwingungssignals bei einer Vielzahl von ausgewählten Modulationsfrequenzen; und Bestimmen der Änderung aus den gemessenen Werten, gekennzeichnet durch folgende Schritte:

Normieren des gemessenen Wertes des Parameters bei jeder Modulationsfrequenz relativ zum Wert des Parameters, der für eine Bezugsprobe bestimmt wurde; und

Vergleichen der normierten Werte mit erwarteten normierten Werten, die von einem Modell abgeleitet sind, das den thermischen Prozeß in den Proben abbildet, wobei das Modell für die ungleichförmige Probe dadurch gekennzeichnet ist, daß es in eine Vielzahl von hypothetischen Schichten unterteilt ist, die jede die gleiche Dicke haben, wobei die Anzahl der Schichten kleiner ist als die Anzahl der ausgewählten Modulationsfrequenzen, so daß die thermischen Charakteristiken der hypothetischen Schichten und die Tiefenvariation dieser thermischen Charakteristiken in der ungleichförmigen Probe bestimmt werden können.

17. Verfahren nach Anspruch 16, dadurch gekennzeichnet, daß die thermischen Charakteristiken die Wärmeleitfähigkeiten der hypothetischen Schichten sind und daß ferner der Schritt vorgesehen ist, die Konzentration der Verunreinigungen oder Defekte in der Probe mit Variationen in der thermischen Leitfähigkeit zu korrelieren, derart, daß ein Profil der Verunreinigungen oder Defekte in Abhängigkeit von der Tiefe erhalten werden kann.

18. Verfahren nach Anspruch 16, dadurch gekennzeichnet, daß die Wärmeschwingungssignale mit einer Einrichtung gemessen werden, die die schwingende Temperatur des beheizten Fleckens auf der Oberfläche der ungleichförmigen Probe detektiert.

19. Verfahren nach Anspruch 18, dadurch gekennzeichnet, daß die Detektoreinrichtung eine Vorrichtung mit einer fotoakustischen Zelle aufweist.

20. Verfahren nach Anspruch 18, dadurch gekennzeichnet, daß die Detektoreinrichtung durch einen Laser definiert ist, der die periodische Erwärmung eines Mediums in Kontakt mit dem erwärmten Fleck auf der Oberfläche der ungleichförmigen Probe abfühlt.

21. Verfahren nach Anspruch 18, dadurch gekennzeichnet, daß die Detektoreinrichtung durch einen Infrarotdetektor definiert ist, der die periodischen Infrarotemissionnen von dem beheizten Fleck auf der Oberfläche der ungleichförmigen Probe abfühlt.

22. Verfahren nach Anspruch 16, dadurch gekennzeichnet, daß die Wärmeschwingungssignale mit einer Einrichtung gemessen werden, die die schwingende Wärmeverlagerung der Oberfläche der ungleichförmigen Probe am beheizten Fleck detektiert.

23. Verfahren nach Anspruch 22, dadurch gekennzeichnet, daß die Detektoreinrichtung eine Lasersonde aufweist.

24. Verfahren nach Anspruch 22, dadurch gekennzeichnet, daß die Detektoreinrichtung ein Laserinterferometer aufweist.

25. Verfahren nach Anspruch 16, dadurch gekennzeichnet, daß die Wärmeschwingungssignale mit einer Einrichtung gemessen werden, die die akustischen Signale detektiert, die von den Wärmeschwingungen erzeugt werden.

26. Verfahren nach Anspruch 25, dadurch gekennzeichnet, daß die Detektoreinrichtung einen Ultraschallwandler aufweist.

27. Verfahren nach Anspruch 25, dadurch gekennzeichnet, daß die Detektoreinrichtung eine Lasersonde aufweist.

28. Verfahren nach Anspruch 25, dadurch gekennzeichnet, daß die Detektoreinrichtung ein Laserinterferometer aufweist.

29. Verfahren nach Anspruch 16, dadurch gekennzeichnet, daß der gemessene Parameter die Phase der Wärmeschwingungssignale ist und die Werte dadurch normiert werden, daß der Wert der Phase der Bezugsprobe von der Phase der ungleichförmigen Probe subtrahiert wird.

30. Verfahren nach Anspruch 16, dadurch gekennzeichnet, daß der gemessene Parameter die Amplitude der Wärmeschwingungssignale ist und daß die Werte dadurch normiert werden, daß ein Verhältnis des von der Bezugsprobe gewonnenen Wertes zum von der ungleichförmigen Probe gewonnenen Wert genommen wird.

31. Verfahren nach Anspruch 16, dadurch gekennzeichnet, daß der Vergleich der gemessenen normierten Werte mit den vom Modell abgeleiteten normierten Werten nach der Methode der kleinsten Quadrate durchgeführt wird.

## Revendications

1. Un procédé pour déterminer l'épaisseur d'une ou de plusieurs couches de matière déposées sur un substrat, par la mesure des paramètres de phase ou d'amplitude de signaux d'ondes thermiques générés par une source de chaleur périodique focalisée, comprenant les opérations suivantes:
on focalise la source de chaluer périodique sur la couche ou la couche supérieure déposée sur le substrat;
on mesure la valeur de l'un de ces paramètre des signaux d'ondes thermiques à un ensemble de fréquences de modulations sélectionnées de la source; et on détermine l'épaisseur à partir des valeurs mesurées, caractérisé en ce que le nombre de fréquences de modulation sélectionnées est supérieur au nombre de couches dont on doit déterminer l'épaisseur; et par les opérations suivantes:
on normalise la valeur mesurée du paramètre de chaque fréquence de modulation sélectionnée, par rapport à la valeur de ce paramètre qui est déterminée pour un échantillon de référence; et
on compare les valeurs normalisées avec des valeurs normalisées prévues.

2. Un procédé selon la revendication 1, caractérisé en ce qu'on mesure les signaux d'ondes thermiques avec des moyens qui détectent la température oscillante du point chauffé sur la surface de la couche supérieure déposée sur le substrat.

3. Un procédé selon la revendication 2, caractérisé en ce que les moyens de détection comprennent un dispositif à cellule photo-acoustique.

4. Un procédé selon la revendication 2, caractérisé en ce que les moyens de détection sont définis par un laser qui détecte l'échauffement périodique d'un milieu en contact avec le point chauffé sur la surface de la couche supérieure déposée sur le substrat.

5. Un procédé selon la revendication 2, caractérisé en ce que les moyens de détection sont définis par un détecteur infrarouge qui détecte les émissions infrarouges périodiques à partir du point chauffé sur la surface de la couche supérieure déposée sur le substrat.

6. Un procédé selon la revendication 1, caractérisé en ce qu'on mesure les signaux d'ondes thermiques avec des moyens qui mesurent le déplacement thermique oscillant de la surface de la couche supérieure déposée sur le substrat, au point chauffé.

7. Un procédé selon la revendication 6, caractérisé en ce que les moyens de détection comprennent une sonde à laser.

8. Un procédé selon la revendication 6, caractérisé en ce que les moyens de détection comprennent un interféromètre à laser.

9. Un procédé selon la revendication 1, caractérisé en ce qu'on mesure les signaux d'ondes thermiques avec des moyens qui détectent les signaux acoustiques qui sont générés par les ondes thermiques.

10. Un procédé sèlon la revendication 9, caractérisé en ce que les moyens de détection comprennent un transducteur ultrasonore.

11. Un procédé selon la revendication 9, caractérisé en ce que les moyens de détection comprennent une sonde à laser.

12. Un procédé selon la revendication 9, caractérisé en ce que les moyens de détection comprennent un interféromètre à laser.

13. Un procédé selon la revendication 1, caractérisé en ce que le paramètre mesuré est la phase des signaux d'ondes thermiques, et les valeurs sont normalisées en soustrayant la valeur de la phase déterminée pour l'échantillon de référence, de la valeur de la phase des signaux d'ondes thermiques.

14. Un procédé selon la revendication 1, caractérisé en ce que le paramètre mesuré est l'amplitude des signaux d'ondes thermiques, et dans lequel les valeurs sont normalisées en calculant un rapport entre la valeur obtenue à partir de l'échantillon de référence et la valeur relative aux signaux d'ondes thermiques.

15. Un procédé selon la revendication 1, caractérisé en ce que la comparaison des valeurs normalisées mesurées avec les valeurs normalisées prévues est effectuée par une procédure d'identification au sens des moindres carrés.

16. Un procédé pour déterminer la variation de caractéristiques thermiques en fonction de la profondeur dans un échantillon non uniforme contenant des impuretés ou des défauts, en mesurant le paramètre de phase ou d'amplitude de signaux d'ondes thermiques générés dans l'échantillon par une source de chaleur périodique focalisée, comprenant les opérations suivantes:
on focalise la source de chaleur périodique sur l'échantillon non uniforme;

20

on mesure la valeur de l'un des paramètres du signal d'ondes thermiques généré dans l'échantillon non uniforme, à un ensemble de fréquences de modulation sélectionnées; et on détermine ladite variation à partir des valeurs mesurées; caractérisé par les opérations suivantes:

on normalise la valeur mesurée du paramètre à chaque fréquence de modulation, par rapport à la valeur de ce paramètre qui est déterminée pour un échantillon de référence; et

on compare ces valeurs normalisées avec des valeurs normalisées prévues qui sont déterminées à partir d'un modèle représentant le processus thermique dans les échantillons, ce modèle pour l'échantillon non uniforme étant caractérisé par une division en un ensemble de couches imaginaires ayant toutes la même épaisseur, le nombre de couches étant inférieur au nombre de fréquences de modulation sélectionnées, grâce à quoi on peut déterminer les caractéristiques thermiques des couches imaginaires et la variation en fonction de la profondeur de ces caractéristiques thermiques dans l'échantillon non uniforme.

17. Un procédé selon la revendication 16, caractérisé en ce que les caractéristiques thermiques sont les conductivités thermiques des couches imaginaires, et comprend en outre l'opération qui consiste à corréler la concentration d'impuretés ou de défauts dans l'échantillon avec des variations de la conductivité thermique, de façon à pouvoir obtenir un profil des impuretés ou des défauts en fonction de la profondeur.

18. Un procédé selon la revendication 16, caractérisé en ce qu'on mesure les signaux d'ondes thermiques avec des moyens qui détectent la température oscillante du point chauffé sur la surface de l'échantillon non uniforme.

19. Un procédé selon la revendication 18, caractérisé en ce que les moyens de détection comprennent un dispositif à cellule photo-acoustique.

20. Un procédé selon la revendication 18, caractérisé en ce que les moyens de détection sont définis par un laser qui détecte l'échauffement périodique d'un milieu en contact avec le point chauffé sur la surface de l'échantillon non uniforme.

21. Un procédé selon la revendication 18, caractérisé en ce que les moyens de détection sont définis par un détecteur infrarouge qui détecte l'émission infrarouge périodique à partir du point chauffé sur la surface de l'échantillon non uniforme.

22. Un procédé selon la revendication 16, caractérisé en ce qu'on mesure les signaux d'ondes thermiques avec des moyens qui détectent le déplacement thermique oscillant de la surface de l'échantillon non uniforme au point chauffé.

23. Un procédé selon la revendication 22, caractérisé en ce que les moyens de détection comprennent une sonde à laser.

24. Un procédé selon la revendication 22, caractérisé en ce que les moyens de détection comprennent un interféromètre à laser.

25. Un procédé selon la revendication 16, caractérisé en ce qu'on mesure les signaux d'ondes thermiques avec des moyens qui détectent les signaux acoustiques qui sont générés par les ondes thermiques.

26. Un procédé selon la revendication 25, caractérisé en ce que les moyens de détection comprennent un transducteur ultrasonore.

27. Un procédé selon la revendication 25, caractérisé en ce que les moyens de détection comprennent une sonde à laser.

28. Un procédé selon la revendication 25, caractérisé en ce que les moyens de détection comprennent un interféromètre à laser.

29. Un procédé selon la revendication 16, caractérisé en ce que le paramètre mesuré est la phase des signaux d'ondes thermiques, et les valeurs sont normalisées en soustrayant la valeur de la phase de l'échantillon de référence, de la phase de l'échantillon non uniforme.

30. Un procédé selon la revendication 16, caractérisé en ce que le paramètre mesuré est l'amplitude des signaux d'ondes thermiques, et dans lequel on normalise les valeurs en déterminant un rapport entre la valeur obtenue à partir de l'échantillon de référence et la valeur obtenue à partir de l'échantillon non uniforme.

31. Un procédé selon la revendication 16, caractérisé en ce que la comparaison des valeurs normalisées mesurées avec les valeurs normalisées obtenues à partir du modèle est effectuée par une procédure d'identification au sens des moindres carrés.

FIG.1.

FIG.2.

FIG.3.

$$Q = Q_0 e^{i\omega t}$$

$K_1$  $K_2$  $K_3$  $K_n$  $K_{n+1}$

HEATED
SURFACE

$d_1$  $d_2$  $d_3$  $d_n$  $d_{n+1}$

$X = X_0$  $X_1$  $X_2$  $X_3$  $X_{n-1}$  $X_n$  $X_{n+1}$

FIG. 4

$K_0$  $K_1$  $K_2$

FREE
SURFACE

$$Q = Q_0 e^{i\omega t}$$

$d_0$  $d_1$

$X = 0$  $X_0$  $X_1$

HEATED
SURFACE

FIG. 6

$$K_2/K_1 = 1/4$$

$$K_2/K_1 = 1/4$$

FIG.5

3